# DEMANDE DE BREVET EUROPEEN

(11) **EP 0 613 011 A1**
(43) Date de publication de la demande: **31.08.1994**
(21) Numéro de dépôt: 94410008.0
(22) Date de dépôt: 21.02.1994
(51) Int. Cl.: G01P 15/08

(54) **Montage de micro-capteur**

(30) Priorité: 23.02.1993 FR 9302339
(71) Demandeur: SEXTANT AVIONIQUE S.A., F-92366 Meudon la Forêt Cédex (FR)
(72) Inventeur: Giroud, Pierre, F-26500 Bourg les Valence (FR); Lefort, Pierre-Olivier, F-26000 Valence (FR); Presset, René, F-26800 Etoiles/Rhône (FR)
(74) Mandataire: de Beaumont, Michel

(57) **Abrégé**

La présente invention concerne un montage de micro-composant parallélépipédique plat constitué d'un assemblage de plaquettes de silicium (1, 2, 3) montées sur un support. Une plaque de silicium (30) est fixée par une première zone de petite dimension (31) de sa surface supérieure à l'une des plaquettes du micro-composant et par une deuxième zone de petite dimension (32) de sa surface inférieure au support (20).

## Description

La présente invention concerne le domaine des micro-capteurs en silicium. De tels micro-capteurs peuvent par exemple constituer des capteurs de pression, des capteurs d'accélération... La présente invention vise plus particulièrement le montage de tels microcapteurs.

Ces dernières années, se sont développés de nouveaux types de micro-capteurs en silicium, tirant partie des techniques de gravure du silicium développées dans le cadre de la fabrication des composants électroniques à semiconducteurs.

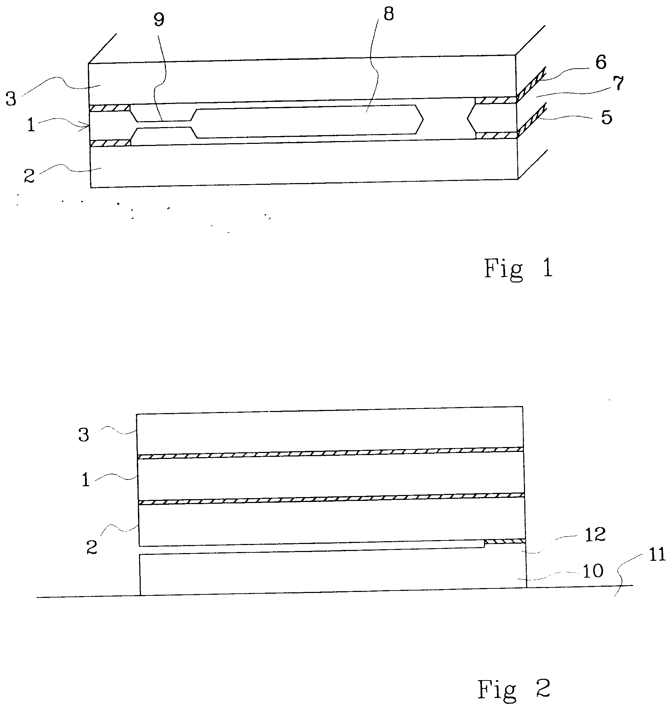

La figure 1 est une vue en coupe très schématique d'un tel micro-capteur constituant un accéléromètre. Ce capteur comprend une plaquette de silicium centrale 1 prise en sandwich entre des plaquettes de silicium externes 2 et 3. L'isolement entre les plaquettes est assuré par une première bande isolante 5, généralement une couche d'oxyde de silicium, entre les plaquettes 1 et 2 et une deuxième bande isolante 6 entre les plaquettes 1 et 3. Ces bandes isolantes prennent la forme d'un cadre disposé entre des plaquettes adjacentes, le long des bords de celles-ci. Des bandes d'oxyde peuvent être obtenues par croissance ou dépôt à partir de l'une des plaquettes adjacentes puis gravure. Une fois les trois plaquettes appliquées les unes contre les autres, une soudure est réalisée par un recuit à une température de 900 à 1100°C. Pour cela, la pratique montre qu'il convient que les surfaces de silicium et d'oxyde de silicium en regard aient de très faibles rugosités, par exemple inférieures à 0,5 nm. Les plaquettes de silicium extrêmes 2 et 3 définissent entre elles et avec la partie de cadre de la plaquette de silicium 1 une enceinte dans laquelle est contenue une atmosphère contrôlée.

La plaquette de silicium centrale 1 est gravée avant assemblage pour comprendre un cadre 7 et une plaque centrale ou masselotte 8 fixée au cadre par des barres minces de suspension 9. Une seule barre apparaît dans la vue en coupe schématique de la figure 1. De façon classique, on utilise aussi des systèmes de suspension à une, deux ou quatre barres. On détecte les variations de capacité entre la face supérieure de la masselotte 8 et la plaquette de silicium 3 et éventuellement également entre la face inférieure de la masselotte et la plaquette inférieure 2. Quand le dispositif est soumis à une accélération, la masselotte 8 se déplace par rapport à l'ensemble du dispositif et les capacités susmentionnées varient. Il est également généralement prévu un asservissement électrostatique pour maintenir en place la masselotte par application d'un champ électrique continu qui représente alors la valeur de l'accélération appliquée. Des électrodes sont montées sur les plaquettes 1, 2 et 3.

Des structures du type de celle de la figure 1 sont décrites plus en détail par exemple dans la demande de brevet EP-A-369 352.

Le microaccéléromètre illustré en figure 1 et décrit ci-dessus ne constitue qu'un exemple d'un micro-capteur en silicium. On connaît également des micro-capteurs de pression réalisés par des technologies similaires et qui présentent également la caractéristique générale d'être constitués d'un assemblage de plaquettes de silicium. La présente invention concerne plus particulièrement le mode de montage d'un tel micro-composant de forme générale parallélépipédique et constitué de silicium.

La figure 2 illustre un montage classique d'un tel composant. Celui-ci, constitué des plaquettes 1, 2 et 3, est collé sur une embase 10 elle-même fixée à un support 11. Classiquement, pour réduire les contraintes liées par exemple à des dilatations différentielles entre le micro-composant et l'embase, la zone de collage est une zone de surface réduite 12, correspondant par exemple à une zone en surépaisseur de l'embase 10, cette surépaisseur résultant éventuellement seulement de l'épaisseur de la couche de colle.

Malgré ces précautions, on s'aperçoit que ce type de montage provoque des dérives thermiques de certains paramètres de fonctionnement du micro-capteur. Par exemple, dans le cas d'un micro-accéléromètre du type de celui de la figure 1, si l'on suppose qu'à une température donnée, la masselotte 8 est parfaitement centrée entre les deux plaquettes 2 et 3 et donc que les deux capacités entre la masselotte et chacune de ces plaquettes sont égales, quand la température varie, il se produit un biais, c'est-à-dire un décentrage de la plaquette qui s'exprime en une valeur d'accélération (en g, g étant l'accélération de la pesanteur) nécessaire pour remettre la plaquette à la position centrée. Il se produit aussi une modification du facteur d'échelle, c'est-à-dire de la variation de capacité différentielle mesurée pour une variation d'accélération donnée, qui s'exprime en ppm.

Pour un microaccéléromètre d'une étendue de mesure de 2g, dans lequel l'épaisseur des plaquettes 1, 2 et 3 est de 380 µm, l'épaisseur des oxydes d'isolement 5 et 6 de 3 µm, la largeur du cadre 7 de 200 µm, la surface de la masselotte ou volet 8 de 2 x 3mm², la longueur du bras (unique) 9 de 1,2 mm et son épaisseur de 20 µm, la largeur de la zone de collage de 1 mm, l'épaisseur de l'embase de céramique 10 de 1 mm, on obtient avec un montage du type de celui de la figure 2 une variation de biais de -2,2 mg/°C et une variation de facteur d'échelle de -35 ppm/°C.

Un objet de la présente invention est de prévoir un mode de montage de micro-composant parallélépipédique qui permette de réduire ces dérives liées à des variations de température.

Pour atteindre cet objet, la présente invention prévoit un montage de micro-composant parallélépipédique plat constitué d'un assemblage de plaquettes de silicium montées sur un support, comprenant une plaque d'un matériau ayant un coefficient de dilatation compatible avec le silicium fixée par une première zone de petite dimension de sa surface supérieure à l'une des plaquettes du micro-composant et par une deuxième zone de petite dimension de sa surface inférieure au support.

Selon un mode de réalisation de la présente invention, le matériau susmentionné est du verre ou du silicium. Dans ce dernier cas, la fixation entre la première zone et l'une des plaquettes du micro-composant est une soudure silicium/silicium ou silicium/oxyde de silicium.

Selon un mode de réalisation de la présente invention, les première et deuxième zones sont disposées en deux emplacements de ladite plaque éloignés l'un de l'autre.

Selon un mode de réalisation de la présente invention, la plaque a le même contour externe que la plaquette externe de plus grande dimension du micro-composant.

Selon un mode de réalisation de la présente invention, la première zone de la plaque est reliée à une extension de l'une des plaquettes du micro-composant. Cette extension est de préférence reliée à la partie principale de la plaquette dont elle fait partie par l'intermédiaire d'une structure de découplage mécanique comprenant au moins une barrette de silicium.

Ces objets, caractéristiques et avantages ainsi que d'autres de la présente invention seront exposés en détail dans la description suivante de modes de réalisation particuliers faite en relation avec les dessins joints parmi lesquels :
la figure 1, décrite précédemment, est une vue en coupe schématique d'un micro-capteur d'accélération selon l'art antérieur ;
la figure 2 est une vue de côté schématique du montage d'un micro-composant selon l'art antérieur ;
la figure 3 est une vue de côté schématique du montage d'un micro-composant selon un mode de réalisation de la présente invention ;
la figure 4 est une vue de dessus d'un exemple de plaque de découplage selon la présente invention ;
la figure 5 est une vue en coupe schématique d'un autre mode de réalisation de montage de microaccéléromètre selon la présente invention ;
la figure 6 est une vue en coupe schématique d'un autre mode de réalisation de montage de microaccéléromètre selon la présente invention ; et
les figures 7 et 8 sont des vues de variantes de réalisation de montages de capteur.

Dans les diverses vues en coupe, les épaisseurs ne sont pas tracées à l'échelle mais sont arbitrairement dilatées pour rendre les figures lisibles. Par exemple, les épaisseurs des plaquettes de silicium sont de l'ordre de 300 à 500 µm tandis que les épaisseurs des couches d'isolant sont de l'ordre de 2 à 4 µm et les épaisseurs des couches de colle de l'ordre de 50 à 200 µm. Les dimensions latérales de chaque composant peuvent être de l'ordre de 3 à 6 mm.

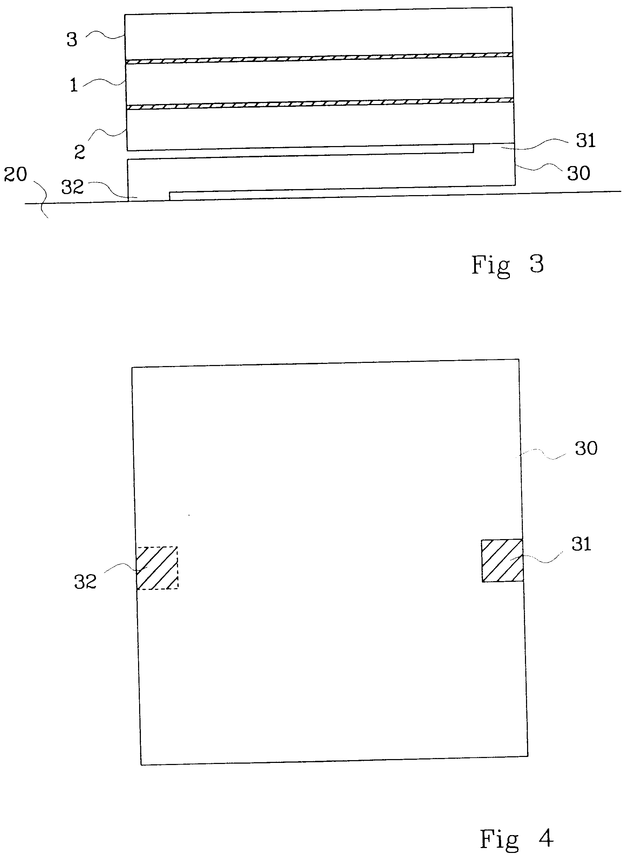

Comme le représente la figure 3, il est prévu selon la présente invention de monter un composant parallélépipédique en silicium comprenant par exemple trois plaquettes assemblées 1, 2 et 3 sur un support 20 (qui peut par exemple correspondre à l'embase de céramique 10 ou au support 11 de la figure 2) par l'intermédiaire d'une pièce de découplage mécanique 30. Cette pièce de découplage mécanique est en un matériau ayant un coefficient de dilatation proche de celui du silicium. C'est par exemple une plaque de verre. Elle peut aussi être constituée d'une plaque de silicium. La plaque 30 est fixée au niveau d'une zone 31 au micro-composant et au niveau d'une zone 32 au support 20. La plaque 30 comprend une surépaisseur au niveau des zones 31 et 32. Cette surépaisseur, et notamment la surépaisseur 31, peut être remplacée par un pion de silicium. De préférence, l'assemblage entre la région 31 et la plaquette du micro-composant avec laquelle elle est en contact est assuré par soudure silicium-silicium ou encore, si l'on veut assurer un isolement électrique par l'intermédiaire d'une couche d'oxyde, par une soudure silicium/oxyde de silicium. Comme cela est connu, une telle soudure silicium/silicium ou silicium/oxyde de silicium est réalisée en mettant en contact des faces bien planes et en réalisant un recuit à une température de 300 à 1000°C. Pour que la plaque 30 assure sa fonction de découplage mécanique et que les contraintes naissant au niveau de la région de contact 32 ne se répercutent pas au niveau de la région de contact 31, ces régions 31 et 32 sont éloignées l'une de l'autre.

Dans le cas où la plaque 30 est une plaque pleine et en reprenant le composant particulier décrit à titre d'exemple en relation avec la figure 2, on a obtenu :
- pour un montage où la zone 31 était collée à la plaquette inférieure du micro-composant une variation de biais de -240 µg/°C (amélioration d'un facteur d'environ 10) et une variation de facteur d'échelle de -35 ppm/°C (pas d'amélioration).
- pour un montage où la zone 31 était soudée à la plaquette inférieure du micro-composant une variation de biais de -8µg/°C (amélioration d'un facteur d'environ 250) et une variation de facteur d'échelle de -0,5 ppm/°C (amélioration d'un facteur 70).

La figure 4 représente en vue de dessus la plaque 30 dans laquelle les zones de contact sont désignées par les références 31 et 32.

Le rôle principal de la plaque 30 est d'atténuer la transmission des contraintes mécaniques entre les zones 32 et 31, la contrainte mécanique sur la zone 32 étant essentiellement liée à des dilatations différentielles entre la zone 32 et le support auquel elle est collée. Notamment dans le cas d'un accéléromètre, la plaque 30 doit avoir une certaine rigidité. En effet, une souplesse transverse de la plaque, perpendiculairement à son plan, affecterait les réactions de la masselotte 8 de détection d'accélération. Par contre, dans le cas où le micro-composant est un capteur de pression, une souplesse dans le sens transverse peut être utile.

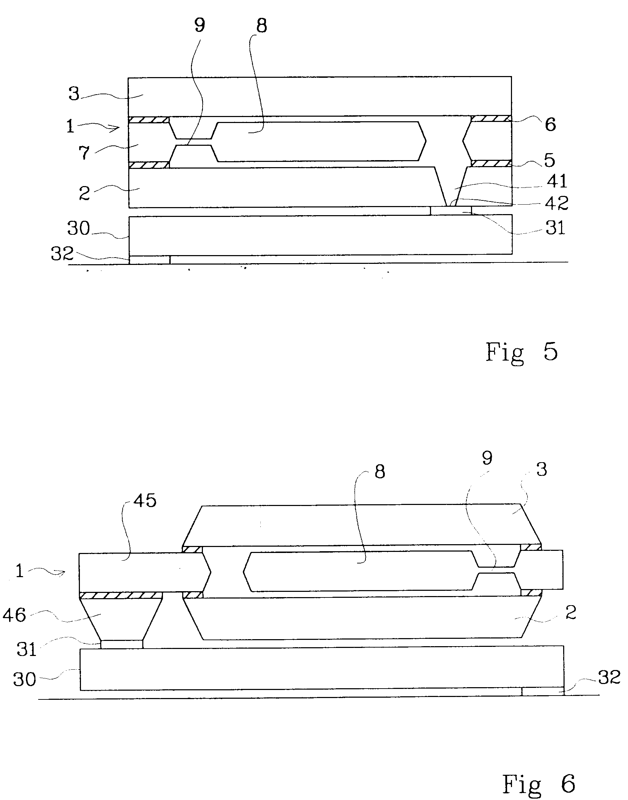

La figure 5 illustre un avantage supplémentaire de la présente invention. Le micro-composant est un accéléromètre représenté de la même façon que celui de la figure 1 et de mêmes éléments y sont désignés par de mêmes références. La plaque 30 a la configuration illustrée en figure 3. Dans un tel accéléromètre, l'atmosphère de l'enceinte contenant la masselotte 8 est choisie en fonction des applications désirées. Dans certains cas, on souhaite un faible amortissement et cette atmosphère est à très faible pression. Par contre, dans d'autres cas, pour avoir un amortissement plus élevé, on préfèrera une atmosphère à plus forte pression, par exemple une pression comprise entre la pression atmosphérique et la moitié de la pression atmosphérique. Le fait d'avoir une pression à l'intérieur de la cavité sensiblement égale à la pression externe peut aussi être utile pour éviter une déformation des plaquettes 2 et 3. Dans ce cas, pour l'assemblage du micro-composant lui-même, il est nécessaire de prévoir un évent entre l'intérieur de la cavité et l'extérieur du composant. En effet, comme on l'a indiqué précédemment, la soudure entre les trois plaquettes 1, 2 et 3 est réalisée à des températures de l'ordre de 1000°C. A ces températures, une surpression relativement élevée apparaît à l'intérieur de l'enceinte et s'exerce sur la surface interne relativement importante des plaquettes 2 et 3. Ceci risque de provoquer un décollement des zones de soudure et un échappement du gaz interne. Après refroidissement, l'herméticité de la soudure n'est pas assurée et en tout cas on n'a plus la pression souhaitée.

Selon l'invention, un évent 41 est formé dans la plaquette 2 de façon à avoir un orifice de sortie 42 de faible surface. Cet évent peut par exemple être formé par gravure dans des plaquettes de silicium orientées (1,0,0). En utilisant un masque carré, l'évent aura une forme pyramidale dont les faces forment un angle d'environ 54° par rapport à l'horizontale. La surface de son orifice de sortie peut alors être sélectionnée avec précision.

Etant donné un micro-composant muni d'un évent du type décrit ci-dessus, le montage du micro-composant sur la partie en relief 31 de la plaque support 36 sera réalisé en faisant d'abord un assemblage à température ordinaire dans une ambiance gazeuse sélectionnée puis en appliquant ensuite un traitement thermique. Alors, puisque la surface de l'ouverture débouchant sur la partie de contact 31 est faible, la force de répulsion sera faible et les risques de décollement des zones de soudure et de fuite de gaz sont pratiquement écartés.

Dans ce qui précède, on a décrit le montage d'un composant du type de celui de la figure 1 sur une embase. De façon naturelle, c'était la plaquette inférieure du micro-composant qui était fixée à la plaque de découplage mécanique 30.

La figure 6 représente un autre type de micro-composant dans lequel la plaquette centrale fait saillie vers l'extérieur. En ce cas, on obtient un meilleur équilibre des forces en fixant la partie en débordement 45 de la plaquette centrale à la plaque de découplage 30. On prévoiera de préférence un pion de silicium intermédiaire 46 entre la partie en débordement 45 et la plaque 30. Ce pion 46 peut être constitué d'une partie d'une tranche de silicium à partir de laquelle on a obtenu par gravure la plaquette 2. De préférence, comme cela est représenté, pour obtenir un meilleur découplage mécanique, le ou les bras de suspension 9 sont disposés à l'opposé du débordement 45.

Il sera clair pour l'homme de métier que, dans le cas de la figure 6 comme dans le cas des figures précédentes, les micro-composants sont obtenus à partir de trois tranches de silicium qui ont été préalablement gravées de la façon souhaitée et qui sont ensuite assemblées puis découpées en composants individuels. La découpe de la plaque de découplage 30 selon la présente invention est de préférence effectuée en même temps que la découpe des composants. Cette découpe correspond à une découpe de l'ensemble des plaquettes 1, 2 et 3 dans le cas de la structure de la figure 1 et à une découpe de la seule plaquette 1 dans le cas de la figure 6.

Bien entendu, la présente invention est susceptible de nombreuses variantes et modifications qui apparaîtront à l'homme de métier, notamment en ce qui concerne la forme et la nature du micro-composant.

De plus, par exemple, on pourra prévoir que la plaque selon l'invention, au lieu d'être liée à la partie principale d'une plaquette de micro-capteur est reliée à une extension de cette plaquette et qu'il est prévu une structure de découplage mécanique entre cette extension et la plaquette correspondante.

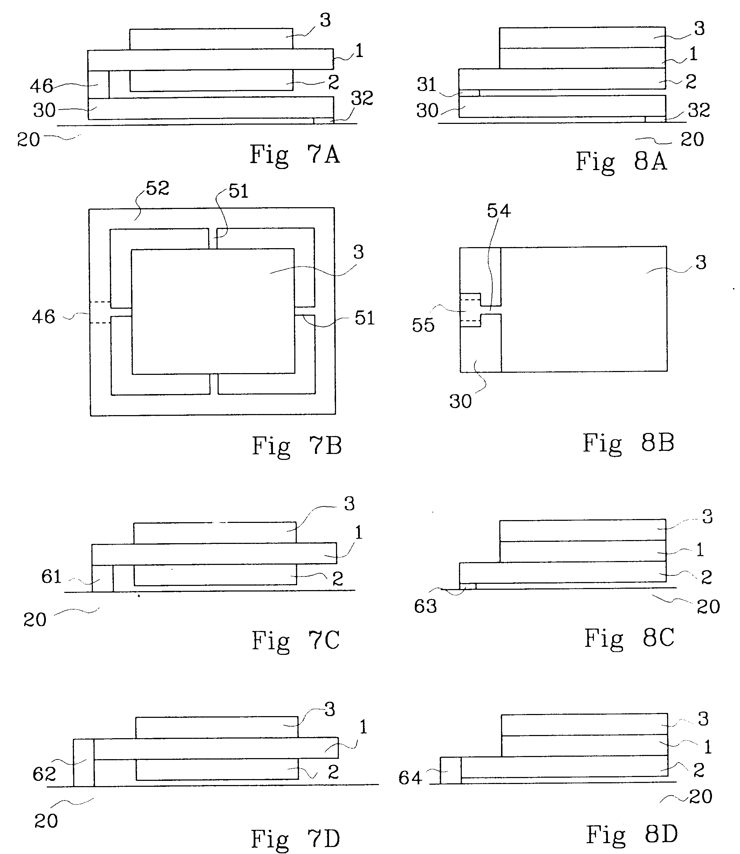

Un premier exemple d'une telle structure de découplage est représenté très schématiquement par la vue de côté de la figure 7A et la vue de dessus correspondante de la figure 7B. Dans ce cas, la structure de découplage est associée à la plaquette centrale 1. Celle-ci, outre sa partie centrale active, est reliée par des barrettes 51 à un cadre 52 auquel est fixé la plaque 30 par un pion 46.

Un deuxième exemple d'une telle structure de découplage est représenté très schématiquement par la vue de côté de la figure 8A et la vue de dessus correspondante de la figure 8B. Dans ce cas, la structure de découplage est associée à la plaquette inférieure 3. Celle-ci, outre sa partie centrale active, est reliée par une barrette 54 à un plot 36 auquel est fixée une surépaisseur 31.

D'autres structures de découplage pourraient être envisagées. Celle des figures 7A-7B pourrait être associée à la plaquette inférieure. Celle des figures 8A-8B pourrait être associée à la plaquette centrale. De plus, ces structures de découplage apportent en elles-mêmes un avantage par rapport aux modes de montage classiques, même sans la plaque 30. On pourra par exemple avantageusement utiliser des montages tels que ceux illustrés en figures 7C-7D et 8C-8D où les plots 61-64 relient directement une extension d'une plaquette au support 20.

## Revendications

1. Montage de micro-composant parallélépipédique plat constitué d'un assemblage de plaquettes de silicium (1, 2, 3) montées sur un support, caractérisé en ce qu'il comprend une plaque (30) d'un matériau ayant un coefficient de dilatation compatible avec le silicium fixée par une première zone de petite dimension (31) de sa surface supérieure à l'une des plaquettes du micro-composant et par une deuxième zone de petite dimension (32) de sa surface inférieure au support (20).

2. Montage de micro-composant parallélépipédique plat selon la revendication 1, caractérisé en ce que ledit matériau est du silicium et en ce que la fixation entre la première zone et l'une des plaquettes du micro-composant est une soudure silicium/silicium ou silicium/oxyde de silicium.

3. Montage de micro-composant parallélépipédique plat selon la revendication 1, caractérisé en ce que ledit matériau est du verre.

4. Montage de micro-composant parallélépipédique plat selon la revendication 1, caractérisé en ce que les première et deuxième zones sont disposées en deux emplacements de ladite plaque éloignés l'un de l'autre.

5. Montage de micro-composant parallélépipédique plat selon la revendication 1, caractérisé en ce que ladite plaque a le même contour externe que la plaquette externe de plus grande dimension du micro-composant.

6. Montage de micro-composant parallélépipédique plat selon l'une quelconque des revendications 1 à 5, caractérisé en ce que la première zone de ladite plaque est reliée à une extension (45 ; 52 ; 55) de l'une des plaquettes du micro-composant.

7. Montage de micro-composant parallélépipédique plat selon la revendication 6, caractérisé en ce que ladite extension est reliée à la partie principale de la plaquette dont fait partie cette extension (52 ; 55) par l'intermédiaire d'une structure de découplage mécanique comprenant au moins une barrette (51 ; 54) de silicium.
